# EUROPEAN PATENT SPECIFICATION

(11) **EP 1 249 756 B1**
(45) Date of publication and mention of the grant of the patent: **15.07.2009**
(21) Application number: 01400934.4
(22) Date of filing: 11.04.2001
(51) Int. Cl.: G06F 9/445

(54) **Management of co-processor information by integrating non-program information with program information**
Verwaltung von Koprozessor-Information durch Integrierung von Nichtprogramm-Information mit Programm-Information
Gestion d'information d'un coprocesseur par intégration d'information non logicielle avec information logicielle

(43) Date of publication of application: 16.10.2002
(73) Proprietor: Texas Instruments Incorporated, Dallas, Texas 75251 (US)
(72) Inventor: Chang, Kenneth Hung-Yi, Burbank CA 91504 (US)
(74) Representative: Holt, Michael

(56) References cited:
- EP-A- 0 910 014
- US-A- 5 263 166
- US-A- 5 604 905

## Description

### FIELD OF THE INVENTION

The present invention relates generally to data processing and, more particularly, to management of co-processor information.

### BACKGROUND OF THE INVENTION

Data processing systems (including single-chip systems) which utilize one or more host processors (for example microprocessors) and one or more co-processors (for example further microprocessors or digital signal processors) under control of the host processor(s) are well known in the art. In such systems, a co-processor is typically configured to perform desired functions by storing associated program information in a ROM (or other program memory) of the co-processor. The operational capability of the co-processor thus corresponds to, and is limited by, the functionality defined by the program(s) stored in its ROM.

It therefore becomes advantageous to provide systems wherein the host processor(s) can dynamically download desired programs to the co-processor(s) in response to user requests. For example, a user of a mobile telephone might initially wish to configure the mobile telephone's co-processor(s) to perform speech coding functions in support of voice communications, and might later wish to configure the co-processor(s) to perform functions in support of wireless internet access. Accordingly, in this example, the host processor(s) would first download into the co-processor(s) a program or programs for configuring the co-processor(s) as a speech coder, and would thereafter download a program or programs for configuring the co-processor(s) as an internet access port.

Different programs (also referred to herein as objects) have different platform requirements, for example, program memory size, data memory size, clock speed, etc. Therefore, a given program may not be suitable for execution on a given co-processor. The suitability of a given program for execution on a given co-processor can be determined by a host processor before downloading the program to the co-processor, provided the program developer can provide to the host processor information indicative of the platform requirements of the program. In systems with multiple co-processors, the host processor may be able to use the platform requirement information at runtime to identify an available co-processor which satisfies the platform requirements of the program. The host processor can then download the program to the identified co-processor.

In conventional practice, non-program information has typically been stored separately from the executable file that contains the program. This practice disadvantageously dictates the use of an auxiliary data source for non-program information, for example an SQL engine, Microsoft's registry, or even a simple text file. This also disadvantageously requires that two separate files be handled, the executable and the non-program information file.

European Patent Application No. 0910014 describes a method for loading of program data eliminating the need for software modification even if changes occur in the storage addresses and data length of the program data stored in the program memory. In order to load program data in a rewritable manner into a number of functional circuits operating in accordance with the supplied program data, a program memory, a program loader, and a microprocessor 14 are provided in the system. In the memory, multiple address pointers are stored in specified storage areas, and corresponding sets of program data are stored in the storage locations indicated by the address pointers in such a manner that a first set of program data is stored in the specified storage area which utilizes the address corresponding to the first address pointer as the start storage address, and a second set of program data is stored in the specified storage area which utilizes the address corresponding to the second address pointer as the start storage address.

It is desirable in view of the foregoing to provide for efficient communication of non-program information, such as platform requirement information, from the program developer to the host processor at runtime.

The present invention resides in a method of downloading a program to a data processor and a data processing apparatus as set out in the appended claims. The present invention provides for efficient communication of non-program information, e.g. platform requirement information, from the program developer to the host processor at runtime. The non-program information is integrated along with the corresponding program information into an executable file which is used by the host processor to download the program information to a selected co-processor

### BRIEF DESCRIPTION OF THE DRAWINGS

The present invention will now be further described, by way of example, with reference to the preferred and exemplary embodiments illustrated in the figures of the accompanying drawings in which:
FIGURE 1 diagrammatically illustrates pertinent portions of exemplary embodiments of a data processing system according to the invention.
FIGURE 2 diagrammatically illustrates an exemplary procedure for producing a virtual database within the file storage facility of FIGURE 1.
FIGURE 3 illustrates portions of the process of FIGURE 2 in greater detail.
FIGURE 4 illustrates in tabular format examples of non-program information which can be provided by a developer and stored in the virtual database of FIGURE 2.
FIGURE 5 diagrammatically illustrates pertinent portions of exemplary embodiments of the application programming interface of FIGURES 1 and 2.
FIGURE 6 illustrates exemplary operations according to the invention.
FIGURE 7 illustrates an example of an executable file which can be produced by the process of FIGURES 2 and 3 and stored in the file storage facility of FIGURES 1, 3 and 5.
FIGURE 8 diagrammatically illustrates, by comparison with FIGURE 1, exemplary advantages of the present invention.

### DETAILED DESCRIPTION OF THE DRAWINGS

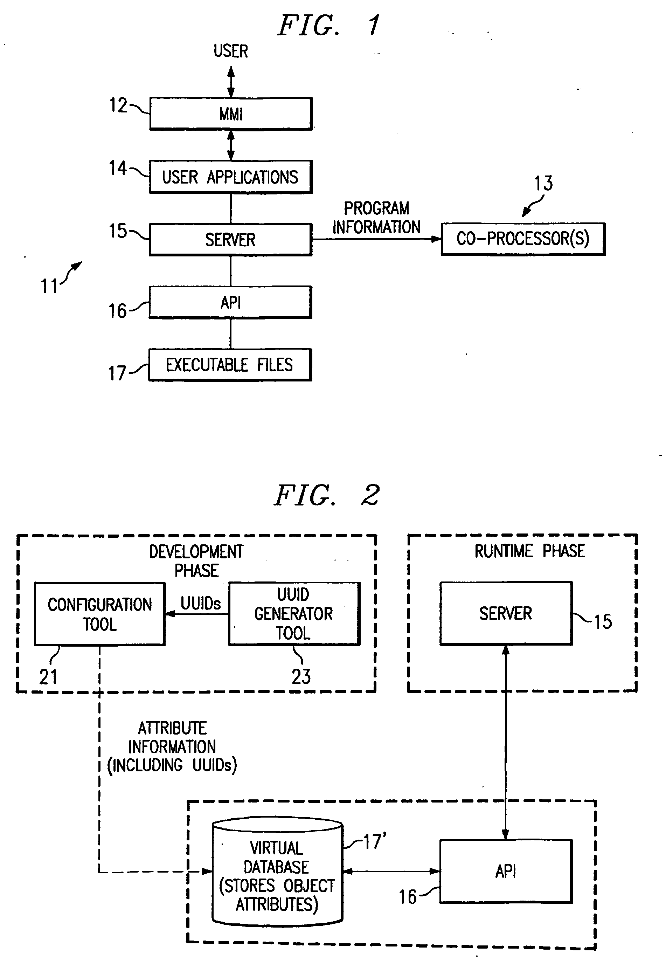

FIGURE 1 diagrammatically illustrates pertinent portions of exemplary embodiments of a data processing system according to the invention. Examples of the data processing system include wireless telephones, laptop computers, and set-top boxes.

The exemplary system of FIGURE 1 includes a host processor 11 (for example a microprocessor) and one or more co-processors 13 (for example additional microprocessors and/or DSPs). The processors 11 and 13 can be embedded together in a single integrated circuit chip, or can be provided on separate integrated circuit chips. A man-machine interface (MMI) 12, for example a keyboard/keypad, visual display, etc. permits a user to access user applications 14 associated with the host processor 11. When a user application determines that a co-processor should execute a particular function, the application directs a server 15 in the host processor 11 to obtain program information to be downloaded from the server 15 to the co-processor, and then used by the co-processor in performing the desired function. In response to the request from the user application 14, the server 15 uses an application programming interface (API) 16 to retrieve the program information from a file storage facility (e.g. a file system or other file storage mechanism) 17 where executable files are stored.

According to the invention, a given executable file stored in the file storage facility 17 includes not only program information which the co-processor uses to perform the desired function, but also includes non-program information associated with the program information. For example, the non-program information could include platform requirement information such as described above, setup parameters, or other general properties of the program. The API 16 distinguishes the program information from the non-program information, and provides both sets of information to the server 15. Based on the non-program information, the server can, for example, make a determination as to which of a plurality of available co-processors is suitable for execution of the desired program, and can then forward the program information to the selected co-processor.

FIGURE 2 diagrammatically illustrates exemplary manners in which the aforementioned non-program information can be configured. As shown in FIGURE 2, during a program development phase, the developer uses software tools to configure a virtual database 17' which stores object (i.e. program) attributes such as, for example, platform requirement information, setup parameters, etc. The virtual database 17' is provided within the storage facility 17 of FIGURE 1 as will be described in more detail below. A configuration tool 21 provides the attribute (non-program) information. A UUID generation tool 23 provides to the configuration tool 21 a universally unique identifier (UUID) for identifying each set of attribute information stored in the virtual database 17'. The UUIDs are included in the attribute information provided by the configuration tool 21. After the virtual database 17' has been established during the development phase, the API 16 accesses the stored object attributes and provides them to the server 15 during the runtime phase.

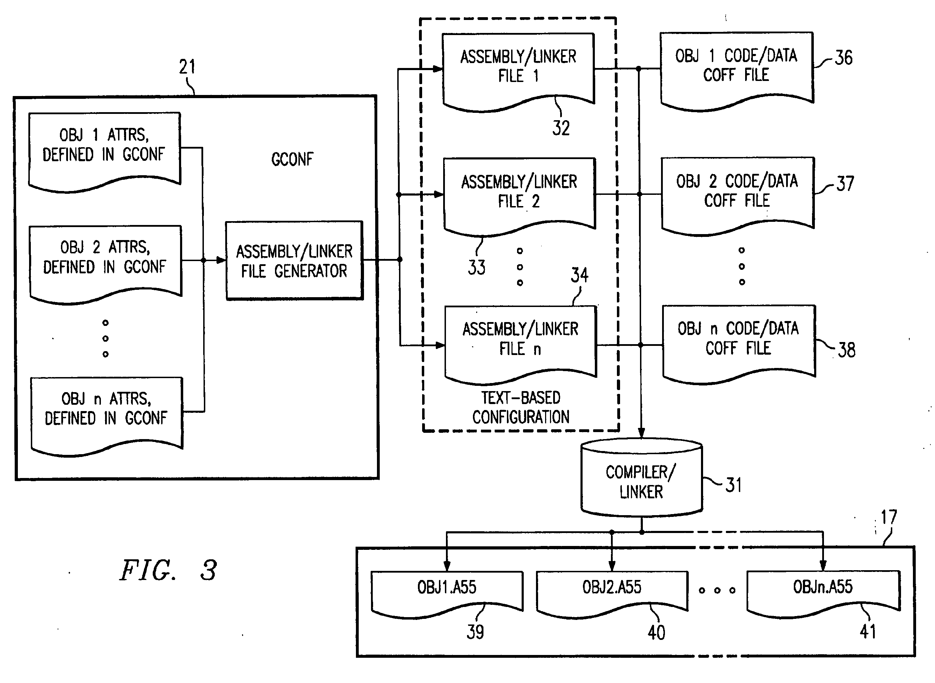

FIGURE 3 diagrammatically illustrates an exemplary process for providing the virtual database 17' of FIGURE 2 in the storage facility 17 of FIGURE 1. In the example of FIGURE 3, the configuration tool 21 is based on Texas Instruments Incorporated's commercially available Graphical Configuration Tool (GCONF). This tool is a Windows GUI application that presents different configurable data modules in a manner similar to Windows Explorer. The developer can conduct a dialogue in conventional fashion with the GCONF tool, inputting the desired attributes for each program (or object) in FIGURE 3. The programs are designated as obj1, obj2, ...objn in FIGURE 3. Using conventional techniques, the GCONF tool can be suitably programmed to convert the input attribute information into information which is suitable for integration into an executable file, for example a COFF (Common Object File Format) executable file. After the attribute information has been input into a suitable configuration file in the GCONF tool 21 during the aforementioned dialogue, the developer uses the GCONF "file/save" command, which prompts the GCONF tool to automatically generate header files, assembly macros and linker command files based on the attribute information provided by the developer during the dialogue process. The linker command files will contain the attribute information in a format suitable for integration into an executable file.

Each of the assembly/linker files 32, 33 and 34 (which include the aforementioned linker command files) is combined with its associated program information (i.e., code and data) at 36, 37 and 38, which program information is contained in conventional executable files (e.g. COFF files). The combining operation can be performed by a conventional compiler/linker 31. The compiler/linker 31 combines the data in the assembly/linker files 32, 33 and 34 with the program information from the files 36, 37 and 38, respectively, to produce corresponding executable files, in this example COFF executable files 39, 40 and 41, that include both program information (from 36, 37 and 38) and non-program information (from 32, 33 and 34).

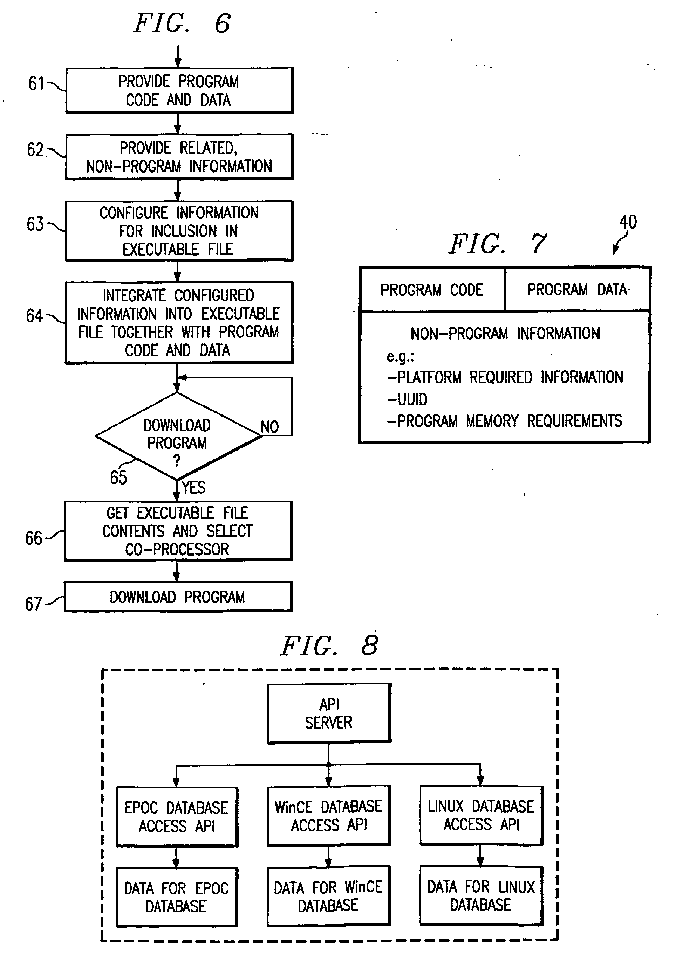

Each of the executable files 39, 40 and 41 illustrated in FIGURE 3 includes program information and non-program information, as illustrated generally by the example of FIGURE 7. The executable file 40 illustrated in FIGURE 7 includes program information (code and data) and corresponding non-program information, for example platform requirement information for the program, as described above. Although the example executable file 40 of FIGURE 7 includes only a single program and its associated non-program information, other executable files in the storage facility 17 could include code and data corresponding to a plurality of programs, together with a plurality of sets of non-program information respectively corresponding to the plurality of programs. The non-program information included in the various executable files 39, 40 and 41 in FIGURE 3 constitutes the virtual database 17' of FIGURE 2, more particularly a virtual database including non-program information corresponding to the various programs stored in the storage facility 17.

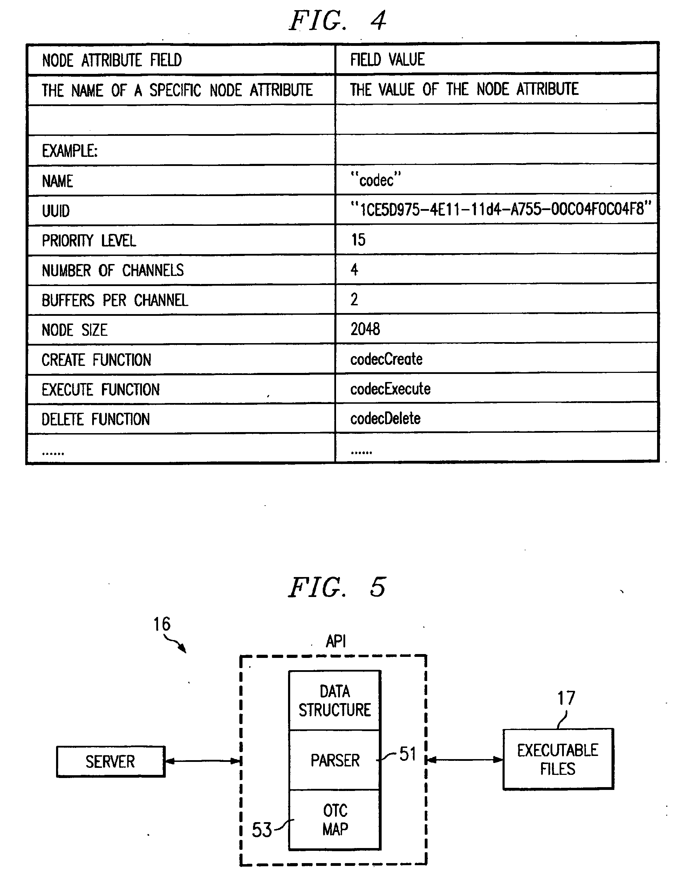

FIGURE 4 shows examples of attribute information associated with an exemplary codec node (i.e., codec program). As shown, the aforementioned UUID can be obtained by the developer (from the tool 23 of FIGURE 2) and provided as attribute information for the codec program.

Referring again to FIGURE 1, when the server 15 begins the process of loading an executable file onto a coprocessor for the first time, the API 16 will record the file path of the executable file. In some embodiments, the API 16 performs data retrieval through a parser 51 as illustrated in FIGURE 5. The parser 51 uses the UUID information described above to identify uniquely each program in the storage facility 17, and to identify data sections within the executable files wherein the corresponding non-program information is stored.

Executable files that conform to COFF, for example the COFF utilized by Texas Instruments Incorporated, support non-downloadable data regions. Using this feature of COFF, the compiler/linker 31 of FIGURE 3 automatically stores the non-program information within the non-downloadable data regions of the COFF executable files. Thus, the parser 51 will search through the COFF executable files within the storage facility 17, comparing the UUIDs of the non-downloadable data sections with the UUID provided to the parser 51 by the user (via the server 15). When the parser finds a non-downloadable data section UUID match, the non-program information from that section can, in some embodiments, be loaded into a corresponding data structure in the API 16. The non-program information can be provided to the server 15 along with the corresponding program information read from the storage facility 17, whereupon the server 15 can utilize conventional techniques to, for example, evaluate whether a given co-processor is suitable for execution of the desired program and/or to setup/configure the co-processor to execute the desired program. The parser 51 can be used to determine the file path information described above, and this information can be stored in an OTC (Object to COFF) map 53. This map 53 can thereafter use the user-provided UUID information to map the various programs to their corresponding COFF files.

FIGURE 6 illustrates exemplary operations of the present invention. The program code and data is provided at 61, and the related non-program information is provided at 62. At 63, the non-program information is configured for inclusion in an executable file. At 64, the configured information is integrated into an executable file together with the program code and data. When it is desired at 65 to download the program from the host processor to a co-processor, the server at 66 obtains the executable file contents, and uses the non-program information to select the co-processor, after which the program can be downloaded into the co-processor at 67.

FIGURE 8 is provided to illustrate by comparison exemplary advantages of the invention described above with respect to FIGURES 1-7. FIGURE 8 diagrammatically illustrates the consequences of the lack of database standardization across different target operating systems. Whereas the invention described above with respect to FIGURES 1-7 is clearly cooperable with multiple target operating systems while using only a single API design and a single (virtual) database configuration, FIGURE 8 illustrates that, without the invention of FIGURES 1-7, multiple target operating systems could be supported only by multiple corresponding database access APIs, one database access API for each OS-specific database. As a result, the overall complexity of the system would increase significantly as clearly shown by a comparison of FIGURES 1 and 8.

It should also be noted that the invention described above with respect to FIGURES 1-7 provides a unique data access approach inasmuch as no other database server will be able to access the data in the above-described virtual database 17' unless, for example, that server has access to the UUIDs that are needed to access the data in the virtual database 17'.

The above-described integration of non-program information with program information in an executable file permits non-program information to be communicated from the developer to the server of the host processor in an efficient manner, and without increasing the size of the runtime program. This is accomplished by, for example, taking advantage of the non-downloadable data section feature of COFF executables. The invention eliminates the need for an auxiliary database on the host processor, thus saving the resources required by a traditional database, which is particularly advantageous for resource-constrained systems such as a system on a chip. The invention further simplifies the process of downloading a program to a co-processor because both program and non-program information can be provided in a single file, thereby advantageously avoiding the conventional requirement of handling two separate files. Also, as described above with respect to FIGURE 8, the invention provides compatibility across multiple platforms with far less complexity than would result through application of conventional techniques.

Although exemplary embodiments of the invention are described above in detail, this does not limit the scope of the invention, which can be practiced in a variety of embodiments.

## Claims

1. A method of downloading a program to a data processor in a system having at least one data processor, comprising:
providing the program in an executable file together with non-program information comprised of at least one platform requirement for execution of the program; and
retrieving the program and non-program information;
determining, from the non-program information in the executable file, whether, the at least one data processor in the system satisfies the at least one platform requirement for the retrieved program; and
on determination that the processor satisfies the platform requirement, downloading the program to the at least one data processors that satisfies the platform requirement.

2. The method of claim 1, wherein the non-program information further comprising configuring the non-program information for inclusion in an executable file and integrating the configured information into an executable file.

3. The method of claim 2, wherein said non-program information further includes a data processor setup parameter associated with said program.

4. The method of claim 1, further comprising: selecting the data processor (13) from a plurality of data processors in the system, using the at least one platform requirement.

5. The method of claim 1, wherein said providing step includes providing the program and the non-program information in a COFF executable file.

6. The method of claim 1, wherein said providing step includes using a compiler/linker to combine a first file containing the non-program information with a second file containing the program.

7. The method of claim 1, wherein said providing step includes providing the non-program information in a non-downloadable section of the executable file.

8. The method of claim 1, wherein said providing step includes converting input attribute information into said non-program information which is suitable for integration with the program in the executable file.

9. The method of claim 1, further comprising: providing a universally unique identifier (UUID) for uniquely identifying the input attribute information for each program and integrating said unique identifier into the executable file.

10. The method of claim 1, wherein said providing step includes integrating a plurality of programs and non-program information corresponding to each of the plurality of programs into a single executable file.

11. The method of claim 10, further comprising: storing, in a file storage facility (17), a plurality of executable files, each of which includes a program and corresponding non-program information.

12. A data processing apparatus, comprising:
a first data processor (11);
a second data processor (13) coupled to said first data processor (11);
a file storage facility (17) coupled to said first data processor (11) , said file storage facility (17) including an executable file containing a program and non-program information comprised of at least one platform requirement for execution of said program; and
wherein said first data processor (11) is programmed to perform a sequence of operations comprising: obtaining said program and said non-program information from said file storage facility (17); determining, from the non-program information in the executable file, whether a second data processor (13) satisfies the at least one platform requirement for the obtained program; and responsive to said second data processor (13) satisfying the at least one platform requirement, downloading said program to said second data processor (13).

13. The apparatus of claim 12, wherein the first and second data processors (11, 13) are provided on a single integrated circuit chip.

14. The apparatus of claim 13, further comprising: a man/machine interface (12) coupled to said first data processor (11) for permitting communication between said first data processor (11) and a user.

15. The apparatus of claim 13, wherein said first data processor (11) is a microprocessor and said second data processor (13) is a digital signal processor.

16. The apparatus of claim 12, including a third data processor coupled to said first data processor (11); and wherein the first data processor is also programmed to select one of the second and third data processors (13), using said non-program information.

17. The apparatus of claim 16, wherein the first, second, and third data processors provided on a single integrated circuit chip.

## Patentansprüche

1. Verfahren zum Herunterladen eines Programms in einen Datenprozessor in einem System mit wenigstens einem Datenprozessor, bei dem:
das Programm in einer ausführbaren Datei zusammen mit Nicht-Programm-Informationen bereitgestellt wird, die aus wenigstens einer Plattformvoraussetzung zur Ausführung des Programms bestehen, und
das Programm und die Nicht-Programm-Informationen abgerufen werden;
aus den Nicht-Programm-Informationen in der ausführbaren Datei festgestellt wird, ob der wenigstens eine Datenprozessor in dem System der wenigstens einen Plattformvoraussetzung für das abgerufene Programm genügt, und
das Programm bei der Feststellung, dass der Prozessor der Plattformvoraussetzung genügt, in den wenigstens einen Datenprozessor, der der Plattformvoraussetzung genügt, heruntergeladen wird.

2. Verfahren nach Anspruch 1, bei dem die Nicht-Programm-Informationen ferner die Konfigurierung der Nicht-Programm-Informationen zur Aufnahme in eine ausführbare Datei und die Integrierung der konfigurierten Informationen in eine ausführbare Datei umfassen.

3. Verfahren nach Anspruch 2, bei dem die Nicht-Programm-Informationen ferner einen zu dem Programm gehörigen Datenprozessor-Installationsparameter enthalten.

4. Verfahren nach Anspruch 1, bei dem ferner der Datenprozessor (13) unter Verwendung der wenigstens einen Plattformvoraussetzung aus mehreren Datenprozessoren in dem System ausgewählt wird.

5. Verfahren nach Anspruch 1, bei dem bei dem Bereitstellungsschritt das Programm und die Nicht-Programm-Informationen in einer COFF-ausführbaren Datei bereitgestellt werden.

6. Verfahren nach Anspruch 1, bei dem bei dem Bereitstellungsschritt ein Compiler/Linker zum Kombinieren einer die Nicht-Programm-Informationen enthaltenden ersten Datei mit einer das Programm enthaltenden zweiten Datei verwendet wird.

7. Verfahren nach Anspruch 1, bei dem bei dem Bereitstellungsschritt die Nicht-Programm-Informationen in einem nicht herunterladbaren Abschnitt der ausführbaren Datei bereitgestellt werden.

8. Verfahren nach Anspruch 1, bei dem bei dem Bereitstellungsschritt Eingabeattributinformationen in die Nicht-Programm-Informationen konvertiert werden, die sich mit dem Programm in der ausführbaren Datei integrieren lassen.

9. Verfahren nach Anspruch 1, bei dem ferner eine universell einmalige Kennung (UUID) zur eindeutigen Kennzeichnung der Eingabeattributinformationen für jedes Programm bereitgestellt und die einmalige Kennung in die ausführbare Datei integriert wird.

10. Verfahren nach Anspruch 1, bei dem bei dem Bereitstellungsschritt mehrere Programme sowie jedem der mehreren Programme entsprechende Nicht-Programm-Informationen in eine einzelne ausführbare Datei integriert werden.

11. Verfahren nach Anspruch 10, bei dem ferner in einer Dateispeichereinrichtung (17) mehrere ausführbare Dateien gespeichert werden, die jeweils ein Programm und entsprechende Nicht-Programm-Informationen enthalten.

12. Datenverarbeitungsgerät mit:
einem ersten Datenprozessor (11),
einem zweiten Datenprozessor (13), der mit dem ersten Datenprozessor (11) gekoppelt ist,
einer Dateispeichereinrichtung (17), die mit dem ersten Datenprozessor (11) gekoppelt ist, wobei die Dateispeichereinrichtung (17) eine ausführbare Datei aufweist, die ein Programm sowie Nicht-Programm-Informationen enthält, die aus wenigstens einer Plattformvoraussetzung zur Ausführung des Programms bestehen, und
bei dem der erste Datenprozessor (11) so programmiert ist, dass er eine Folge von Operationen ausführt, die folgendes umfasst: das Programm und die Nicht-Programm-Informationen werden aus der Dateispeichereinrichtung (17) abgerufen; aus den Nicht-Programm-Informationen in der ausführbaren Datei wird festgestellt, ob ein zweiter Datenprozessor (13) der wenigstens einen Plattformvoraussetzung für das abgerufene Programm genügt; und als Reaktion darauf, dass der zweite Datenprozessor (13) der wenigstens einen Plattformvoraussetzung genügt, wird das Programm in den zweiten Datenprozessor (13) heruntergeladen.

13. Gerät nach Anspruch 12, bei dem der erste und der zweite Datenprozessor (11, 13) auf einem Einzelchip mit integrierter Schaltung vorgesehen sind.

14. Gerät nach Anspruch 13, ferner mit einer Mensch-Maschine-Schnittstelle (12), die mit dem ersten Datenprozessor (11) gekoppelt ist, um eine Kommunikation zwischen dem ersten Datenprozessor (11) und einem Benutzer zu ermöglichen.

15. Gerät nach Anspruch 13, bei dem der erste Datenprozessor (11) ein Mikroprozessor ist und der zweite Datenprozessor (13) ein Digitalsignalprozessor ist.

16. Gerät nach Anspruch 12, das einen mit dem ersten Datenprozessor (11) gekoppelten dritten Datenprozessor aufweist und bei dem der erste Datenprozessor auch so programmiert ist, dass er unter Verwendung der Nicht-Programm-Informationen den zweiten oder den dritten Datenprozessor (13) auswählt.

17. Gerät nach Anspruch 16, bei dem der erste, der zweite und der dritte Datenprozessor auf einem Einzelchip als integrierte Schaltung vorgesehen sind.

## Revendications

1. Procédé de téléchargement d'un programme vers un processeur de données dans un système qui présente au moins un processeur de données, comprenant les étapes consistant à :
fournir le programme dans un fichier exécutable ainsi que des informations non logicielles qui comprennent au moins une exigence de plate-forme pour une exécution du programme ; et
extraire le programme et les informations non logicielles ;
déterminer, à partir des informations non logicielles présentes dans le fichier exécutable si l'au moins un processeur de données dans le système satisfait à l'au moins une exigence de plate-forme pour le programme extrait ; et
une fois la détermination faite que le processeur satisfait à l'exigence de plate-forme, télécharger le programme vers l'au moins un processeur de données qui satisfait à l'exigence de plate-forme.

2. Procédé selon la revendication 1, dans lequel les informations non logicielles comprennent en outre la configuration des informations non logicielles pour leur inclusion dans un fichier exécutable et l'intégration des informations configurées dans un fichier exécutable.

3. Procédé selon la revendication 2, dans lequel lesdites informations non logicielles comprennent en outre un paramètre de réglage de processeur de données associé audit programme.

4. Procédé selon la revendication 1, comprenant en outre l'étape consistant à : sélectionner le processeur de données (13) à partir d'une pluralité de processeurs de données présents dans le système, en utilisant l'au moins une exigence de plate-forme.

5. Procédé selon la revendication 1, dans lequel ladite étape de fourniture comprend l'étape consistant à fournir le programme et les informations non logicielles dans un fichier exécutable COFF.

6. Procédé selon la revendication 1, dans lequel ladite étape de fourniture comprend l'utilisation d'un compilateur / éditeur de liens de manière à combiner un premier fichier qui contient les informations non logicielles avec un deuxième fichier qui contient le programme.

7. Procédé selon la revendication 1, dans lequel ladite étape de fourniture comprend l'étape consistant à fournir les informations non logicielles dans une partie non téléchargeable du fichier exécutable.

8. Procédé selon la revendication 1, dans lequel ladite étape de fourniture comprend l'étape consistant à convertir les informations d'attribut en entrée en dites informations non logicielles qui conviennent à leur intégration avec le programme dans le fichier exécutable.

9. Procédé selon la revendication 1, comprenant en outre l'étape consistant à : fournir un identificateur unique universel (UUID) destiné à identifier de manière unique les informations d'attribut en entrée pour chaque programme et à intégrer ledit identificateur unique dans le fichier exécutable.

10. Procédé selon la revendication 1, dans lequel ladite étape de fourniture inclut une étape consistant à intégrer une pluralité de programmes et d'informations non logicielles qui correspondent à chacun de la pluralité de programmes dans un fichier exécutable unique.

11. Procédé selon la revendication 10, comprenant en outre l'étape consistant à : stocker, dans une installation de stockage de fichiers (17), une pluralité de fichiers exécutables, chacun d'eux comprenant un programme et des informations non logicielles correspondantes.

12. Appareil de traitement de données, comprenant :
un premier processeur de données (11) ;
un deuxième processeur de données (13) relié audit premier processeur de données (11) ;
une installation de stockage de fichiers (17) reliée audit premier processeur de données (11), ladite installation de stockage de fichiers (17) comprenant un fichier exécutable qui contient un programme et des informations non logicielles qui comprennent au moins une exigence de plate-forme pour l'exécution dudit programme ; et
dans lequel ledit premier processeur de données (11) est programmé de manière à exécuter une séquence d'opérations comprenant : l'obtention dudit programme et desdites informations non logicielles à partir de l'installation de stockage de fichiers (17) ; la détermination, à partir des informations non logicielles présentes dans le fichier exécutable, si un deuxième processeur de données (13) satisfait à l'au moins une exigence de plate-forme pour le programme obtenu ; et en réponse au fait que ledit deuxième processeur de données (13) satisfait à l'au moins une exigence de plate-forme, le téléchargement dudit programme vers ledit deuxième processeur de données (13).

13. Appareil selon la revendication 12, dans lequel les premier et deuxième processeurs de données (11, 13) sont disposés sur une unique puce de circuit intégré.

14. Appareil selon la revendication 13, comprenant en outre : une interface homme / machine (12) reliée audit premier processeur de données (11) de manière à permettre une communication entre ledit premier processeur de données (11) et un utilisateur.

15. Appareil selon la revendication 13, dans lequel ledit premier processeur de données (11) est un microprocesseur et ledit deuxième processeur de données (13) est un processeur de signaux numériques.

16. Appareil selon la revendication 12, comprenant un troisième processeur de données relié audit premier processeur de données (11); et dans lequel ledit premier processeur de données est également programmé de manière à sélectionner l'un des deuxième et troisième processeurs de données (13), en utilisant lesdites informations non logicielles.

17. Appareil selon la revendication 16, dans lequel les premier, deuxième et troisième processeurs de données sont disposés sur une unique puce de circuit intégré.
